# EUROPEAN PATENT SPECIFICATION

(11) **EP 2 731 163 B1**
(45) Date of publication and mention of the grant of the patent: **29.03.2017**
(21) Application number: 13181295.0
(22) Date of filing: 22.08.2013
(51) Int. Cl.: H01M 2/02, H01M 2/20, H01M 10/613, H01M 10/6556, H01M 10/6563, H01M 10/6564, H01M 10/6557

(54) **Quasi-bipolar battery cells and arrangements**
Quasi-bipolare Batteriezellen und Anordnungen
Agencements et cellules de batterie quasi-bipolaires

(30) Priority: 27.08.2012 IL 22166412
(43) Date of publication of application: 14.05.2014
(73) Proprietor: UniCell LLC, Valley Cottage, NY 10989 (US)
(72) Inventor: Goldstein, Jonathan R., 95470 Jerusalem (IL); Meitav, Arieh, 75660 Rishon Le-Tzion (IL)
(74) Representative: Becker Kurig Straus

(56) References cited:
- US-A- 4 041 216
- US-A1- 2002 086 205
- US-A1- 2010 015 512

## Description

### FIELD OF THE INVENTION

The present invention relates generally to methods for forming monopolar units, quasi-bipolar battery cells, multiple battery units, and more specifically to methods for forming multi-cell, quasi-bipolar battery assemblies from combinable battery cells.

### BACKGROUND OF THE INVENTION

Batteries have been known for many decades and have been employed commercially in a relatively wide variety of applications. Such batteries include rechargeable lead-acid batteries for starting, lighting and ignition for automobiles, trucks and other vehicles as well as industrial applications, batteries such as rechargeable lithium-ion or nickel-metal hydride for hybrid and electric vehicles and smaller types such as rechargeable lithium-ion and primary zinc-alkaline batteries for a myriad of consumer uses.

One serious disadvantage for example of lead-acid battery systems is their relatively low energy and power per unit weight (i.e., Watt hr/unit weight and Watts/unit weight, respectively) provided by such systems. Energy and power per unit volume are also very important. There have been major strides to develop more efficient batteries of all types along these lines, both in primary and secondary systems.

It has long been a desire to provide an energy source with the reliability of a flooded or sealed lead-acid battery system while at the same time achieving much greater energy and power densities. One approach uses a bipolar construction for the battery since this can offer weight and current distribution advantages. For this reason, considerable effort has been directed to developing lead-acid and other electrochemical systems such as lithium-ion batteries in a bipolar design. In a conventional bipolar design, positive and negative active materials are prepared on opposite sides of a single conductive (usually metallic) sheet or substrate and the unit is referred to as a bipolar plate. Bipolar batteries are built up by combining together a number of such bipolar plates with edge sealing to the adjacent bipolar plate, so that individual cells have each an anode face, a cathode face, a separator between them, and an electrolyte. The end plates of such a bipolar stack have of course only one type of active material placed internally. Current for charge (in the case of a rechargeable system) and discharge passes from cell to cell through the common metallic wall and there is no need for tabs, wiring or an outer case as in conventional monopolar battery construction. This offers weight, compactness and high power advantages over monopolar battery construction.

One of the drawbacks of conventional bipolar construction however is that due to the common wall in adjacent cells (with no intercell spacing possible) and the frequent need to have a large number of cells of this type packed together in order to reach required voltages, it is difficult to adequately cool such crowded assemblies. This is particularly the case for the inner cells of a battery pack.

The active materials, separators and electrolyte are all poor thermal conductors and there is a major issue of adequate heat dissipation especially at the high discharge and charge rates common for bipolar. This can result in severe cell overheating which may cause hazard situations and in general can greatly reduce cycle life. Furthermore since there is effectively only one electrode face per cell in a bipolar construction (unlike regular monopolar where many parallel plates can be connected in a single cell) the capacity of cells in a conventional bipolar is quite limited. The expedient to increase capacity by use of a thicker layer of active material is not practical due to the drastic rate limitations it imposes. Finally many battery systems including bipolar require cumbersome liquid phase cooling which can be heavy and involve cooling liquids. It would be advantageous to provide an air or inert gas cooled battery system.

Some examples of publications in the bipolar field include US7829136, which describes fuel cells and methods of making bipolar fuel cell electrodes. The invention referred to provides a method of producing bipolar fuel cell electrodes, including providing a collector having a first side and a second side opposite the first side, coating the first side with a first active material, coating the second side with a second active material, and compressing the coated collector to form a bipolar cell electrode. The invention also provides a method of producing bipolar fuel cell electrodes wherein the first side of the collector is first coated with the first active material and compressed at a first pressure, and subsequently the second side of the collector is coated with the second active material and compressed at a second pressure.

US2006292443A describes a bipolar battery which has a positive electrode unit, a negative electrode unit, at least one bipolar electrode unit stacked therebetween, an electrolyte layer separating each adjacent electrode unit, and a gasket positioned about each electrolyte layer for creating a seal about the electrolyte layer in conjunction with the electrode units adjacent thereto.

US2009023061 describes a stacked battery which has at least two cell segments arranged in a stack. Each cell segment may have a first electrode unit having a first active material electrode, a second electrode unit having a second active material electrode, and an electrolyte layer between the active material electrodes.

US2009159582 discloses a double pole battery comprising three electrochemical cells stacked along a longitudinal axis, each cell consisting of an anode, a cathode and an electrolyte placed between the anode and the cathode, a current collector plate electrically connecting an anode of a cell and a cathode of an adjacent cell, a current collector plate on the anode of a cell located at a first longitudinal end of the stack, a current collector plate on the cathode located at a second longitudinal end of the stack, an electrolyte-proof lateral wall surrounding each cell between each pair of successive collector plates, wherein the lateral walls of two adjacent cells are offset transversely one relative to the other relative to the longitudinal axis, in such a way they are not superposed one on the other.

The major disadvantages of these inventions include a complex production process for formation of the stacked bipolar cells, limitations to size of the cells due to production process requirements and lack of ability to form three-dimensional nonplanar battery electrode structures, in most cases.

WO 2013/017207 discloses a plurality of single cells connected in series with electrically interconnected protruding flanges situated outside (above and below) the cell footprint providing the series connection between individual cells. The cells are not spaced apart. It is clear that this invention sacrifices stack compactness and does not allow facile intercell cooling.

US 4,041,216 relates to a sodium-sulphur battery for electrical drive. It is formed by elements each comprising a cathode tank containing sulphur, a solid electrolyte tube closed at its lower end, containing sodium and arranged in the said cathode tank, a ceramic insulating support for keeping the said electrolyte tube in the said cathode tank, an anode tank containing a supply of sodium, that battery being characterized in that it comprises m groups of n modules each comprising p elements, those elements being electrically interconnected in parallel in each of the modules by means of plates connected to the bottoms of the said cathode tanks and anode tanks respectively, each of the said plates comprising a substantially central bore. The invention is implemented for propelling all electric vehicles.

### SUMMARY OF THE INVENTION

It is an object of some aspects of the present invention to provide improved battery assemblies for consumer use.

In some embodiments of the present invention, improved methods are provided for forming multi-cell, quasi-bipolar battery combinations/assemblies from combinable battery units.

In some further embodiments of the present invention, improved methods are provided for forming multi-cell, quasi-bipolar battery combinations from combinable monopolar battery units.

In other embodiments of the present invention, a method and system is described for providing three-dimensional quasi-bipolar battery combinations from combinable monopolar battery units.

Further embodiments of the present invention are directed to improved battery assemblies, having improved cycle life, current distribution, reduced ohmic losses and superior cooling means.

In some embodiments of the present invention, quasi-bipolar battery assemblies are provided.

There is thus provided according to an embodiment of the present invention, a quasi-bipolar battery assembly including
a) at least two battery cells, each battery cell including;
   i) a first hollowed metallic element and a second hollowed metallic element each with a peripheral rim;
   ii) an insulating sealing gasket disposed between the peripheral rims;
   iii) an anode and cathode separated by a porous separator, with the anode being in electrical connection with a first hollowed metallic element and the cathode being in electrical connection with the second metallic element;
   iv) an electrolyte disposed with the metallic elements; and
b) at least one air space disposed between adjacent battery cells, adapted to receive gaseous cooling fluid therethrough;
wherein the adjacent battery cells are connected by electrically conductive interconnections disposed or substantially disposed in the air spaces.

The hollowed metallic elements are disposed such that the first element of a first cell is in electrical contact with the second element of a second cell. The electrical contact is via a large face or sheet of the metallic element, thereby providing high currents at minimal ohmic loss.

In additional embodiments for the present invention, there is provided a novel quasi-bipolar battery, applicable specifically for the lithium-ion battery system, but also to other batteries. As well as providing high power, the batteries of the invention enable an electric vehicle battery system to have an increased energy or power per unit weight and unit volume compared with a standard non-bipolar system. The batteries of the present invention allow adequate heat removal for individual cells while for conventional bipolar the heat removal is substantially more problematic. This will enable enhancement of cycle life of the battery system in electric vehicles where high rate battery capability with adequate cooling is most desirable

Specific to this invention are process and constructional advantages over prior art bipolar arrangements mentioned hereinabove. This battery can be standalone, for example, for use in aerial vehicles such as aviation drones or for use in computer battery packs, but is designed primarily for electric vehicles. In one scenario known in the art the electric vehicle incorporates two batteries. The two-battery system would comprise a small quasi-bipolar power battery according to this invention and a larger energy battery optimized for energy content, working together with the quasi-bipolar. The quasi-bipolar system of this application will have significant operational advantages over rival bipolar or non-bipolar candidates for such a two battery system for the reasons discussed.

The quasi-bipolar battery of the present invention may be further constructed and configured to operate in a hybrid vehicle such as, but not limited to, the Toyota Prius (battery/gasoline engine or battery/diesel engine). The quasi-bipolar battery of the present invention is constructed and configured to operate as a high power, but relatively limited energy density battery that provides sustained high power for acceleration and absorbs regenerative braking energy on the road in the vehicle. The other (energy) battery can then be optimized for energy and cycle life (since the high power needs are taken care of by the quasi-bipolar and temperature excursions are eased) and the system should allow ranges of at least 600km per charge. Furthermore the energy battery, with power needs relaxed, can use anode/cathode combinations that are not feasible if power capability is required. These combinations can use high voltage cathodes and anodes even with sloping discharge curves. As with regular lithium-ion batteries the system can be recharged at home or in parking lots on a regular basis, or the battery system recharged or the energy battery swapped at a service station. We note the quasi bipolar provides considerably higher capacity vs the conventional bipolar and hence it can support longer power boosting

In contrast to the configuration of prior art monopolar cells, where current is usually withdrawn via a single terminal tab, the quasi-bipolar construction of the present invention allows current passage to the next cell directly through the highly conducting, large area metallic cell wall. The quasi-bipolar cells of the present invention also enable some weight saving, since no tabs or wire connections to the next cell are needed, the quasi-bipolar current collectors allow uniform current distribution at minimal ohmic drop and capability for high current withdrawal as well as improved cooling. For increasing capacity and current of a quasi-bipolar stack several such stacks may be connected in parallel.

The proposed quasi-bipolar battery, whether lithium-ion, nickel-metal hydride, lead-acid or additional chemistries,, is applicable also in combination with other energy systems promising long range such as metal-air batteries or fuel cells. Metal-air systems such as electrically rechargeable zinc-air or mechanically rechargeable zinc-air and aluminum-air, as well as hydrogen-air or methanol-air fuel cells, are primarily high energy, low power systems. They could all benefit performance-wise from combination with a high power quasi-bipolar system as per the proposed invention.

The present invention provides quasi-bipolar cells and stacks, with one metallic face of a cell carrying anode material or connecting internally with a support carrying anode active material of a first cell and the other metallic face of the same cell carrying cathode material or connected with a support carrying cathode active material. The current between cells therefore can pass directly from the whole conducting terminal face of each side of the cell to the adjacent cell with no need for tabbing and wiring between cells, giving weight, volume and current takeoff benefits. Cells can be spaced to facilitate cooling of the large area terminal faces allowing individual cooling of each cell.

In a preferred embodiment, adjacent terminal faces of cells are electrical connected in series by welding or bonding means located physically within or substantially within the space between cells and within the footprint of the cell, such that a separation is enabled between cells for cooling purposes. This construction offers advantages over the conventional bipolar (for example in cell manufacture, though avoidance of bipolar elements with the problematic situation of anode and cathode active materials on the same bipolar element, for eased cell quality control and screening since cells are separate units prior to battery assembly, and improved cooling since cells are spaced apart) while maintaining weight and volume superiority over non bipolar.

The quasi-bipolar cells of the present invention are appropriate to all types of battery systems whether primary or rechargeable, such as lithium-ion, lithium-manganese dioxide, lead-acid, nickel-metal hydride, nickel-zinc, silver-zinc and manganese dioxide-zinc and also to other electrochemical systems with stacked electrodes such as capacitors. They are adapted for non-EV applications, such as drones, antenna devices or consumer systems.

There is thus provided according to an embodiment of the present invention, a quasi-bipolar battery arrangement suitable for use in an electric vehicle including at least two juxtaposed monopolar battery units, each unit including;
a) a metallic outer face on one side of the cell comprising the anode terminal, either supporting anode active material within the cell or electrically connected inside the cell to an anode material support element carrying anode active material;
b) a metallic outer face on the other side of the cell comprising the cathode terminal, either supporting cathode active material within the cell or electrically connected inside the cell to a cathode material support element carrying cathode active material; and
c) at least one porous inter-electrode separator layer and at least one peripheral insulating sealing member such that the separator layer is disposed between the anode and cathode elements, adapted to retain the anode in a short-free configuration at a preselected distance from the cathode and such that the peripheral sealing member completes the unit enclosure, wherein the unit enclosure is configured to house an electrolyte fluid.

Additionally, according to an embodiment of the present invention, each support element further includes an optional insulating layer disposed on an inner face or covering a major portion of the support element outside the unit enclosure.

Furthermore, according to an embodiment of the present invention, the quasi-bipolar battery includes at least two juxtaposed standalone monopolar battery units.

Moreover, according to an embodiment of the present invention, the quasi-bipolar battery arrangement includes a plurality of juxtaposed standalone quasi-bipolar battery cells.

Furthermore, according to an embodiment of the present invention, each of the monopolar battery units is selected from an electrode geometry in the group consisting of; two-dimensional (2D); three dimensional (3D), planar, sinusoidal, V-shaped, and combinations thereof. The monopolar units may be constructed using known designs applicable in the art such as rigid prismatic, flexible pouch and the like.

Further, according to an embodiment of the present invention, the quasi-bipolar battery cell further includes;
a) an anode conductive end section adapted for current take off from the anode material support element at one extremity of the quasi-bipolar stack; and
b) a cathode conductive end section adapted for current take off from the cathode material support element at the other extremity of the quasi-bipolar stack.

Yet further, according to an embodiment of the present invention, the anode and cathode active materials are selected to reversibly intercalate lithium in a rechargeable lithium battery chemistry and the electrolyte fluid is non-aqueous.

By electrolyte fluid is meant the ion transporting liquid between the anode and cathode in the battery cells. In lithium batteries this fluid is typically a non-aqueous solvent that contains an ionizing salt such as a lithium salt. In aqueous batteries the fluid can be an aqueous acid solution, for example sulphuric acid in the case of lead-acid batteries or it can be an aqueous alkaline solution, for example potassium hydroxide in the case of nickel-metal hydride batteries. The electrolyte fluid can contain performance boosting additives and may be in gelled form or include polymer precursors

Additionally, according to an embodiment of the present invention, the anode and cathode are selected for a rechargeable battery chemistry and include lead, lead dioxide, metal hydride, iron, zinc, nickel hydroxide, silver oxide, manganese dioxide and in which the electrolyte fluid is aqueous.

Furthermore, according to an embodiment of the present invention, the anode and the cathode are selected from primary battery chemistries and the electrolyte fluid is aqueous or non-aqueous, as is known in the art.

Further, according to an embodiment of the present invention, the anode active material includes at least one of lithium, materials to intercalate lithium, carbon, magnesium, lead, metal hydride, iron and zinc. Yet further, according to an embodiment of the present invention, the cathode material is designed to reversibly intercalate lithium.

Moreover, according to an embodiment of the present invention, the cathode active material includes at least one of materials to intercalate lithium, lead dioxide, nickel hydroxide, silver oxide, and manganese dioxide. Non-limiting examples include transition metal oxides and phosphates.

According to another embodiment of the present invention, the cathode active material support element includes at least one of copper, aluminum, steel, stainless steel, titanium, nickel, lead, graphite, carbon, titanium oxide, tin oxide and combinations thereof. The combination can include coating of one metal by another.

Additionally, according to an additional embodiment of the present invention , the anode active material support element includes at least one of copper, aluminum, steel, stainless steel, titanium, nickel, lead, graphite, carbon, titanium sub-oxide, tin dioxide and combinations thereof. The combination can include coating of one metal by another.

Moreover, according to an embodiment of the present invention, the sealing member includes at least one of polymer, resins, acrylic, thermoplastic, epoxy, silicone and combinations thereof, applied as gasketing, adhesive or multiple layered sheets (such as a 3-ply with aluminum foil sandwiched between nylon and thermoplastic layers).

Furthermore, according to an embodiment of the present invention, the electrolyte fluid includes at least one of non-aqueous fluid and combinations thereof.

Additionally, according to an embodiment of the present invention, the separator is constructed from at least one of microporous, woven or non-woven polymer, selected from the group consisting of polyolefin, nylon, cellulose, PVDF and combinations thereof.

According to an embodiment of the present invention, the insulating layer is constructed from at least one of polymer, resin, ceramic and combinations thereof.

Additionally, according to an embodiment of the present invention, the anode conductive end section is constructed from at least one of aluminum, copper, graphite and combinations thereof. In a preferred embodiment the anode conducting end section is a metal sheet of adequate current takeoff capability supported by a lightweight plastic support.

Additionally, according to an embodiment of the present invention, the quasi-bipolar battery arrangement further includes an electrically conductive bonding material juxtaposed in between the at least two juxtaposed monopolar battery units.

In a yet further embodiment of the present invention the terminal face on each side of individual cells extends somewhat beyond the cell footprint (defined below) but is bent back to be welded to a similar bent back extension from the next cell, the extension and join being arranged to lie completely or substantially within the cell footprint. An element such as a corrugated perforated metal plate can then be welded on or near the join point of the extensions. This corrugated piece spaces adjacent cells by a fixed distance to afford mechanical stability to a stack of cells and allow inter-cell cooling by for example a flow of air directed between the cells. Note this effectively allows excellent cooling to each individual cell of the battery. The corrugated piece will also enable additional conductive contact between adjacent cells.

Additionally, according to an embodiment of the present invention, the bipolar battery arrangement has a C rate capability in the range of 5C to 50 C.

There is thus provided according to an additional embodiment of the present invention, a method for producing a quasi-bipolar battery arrangement suitable for use in an electric vehicle including juxtaposing at least two monopolar battery units.

Additionally, according to an embodiment of the present invention, the method further includes constructing each of the monopolar battery units independently. This embodiment offers process advantages in the assembly of a bipolar stack since preselected cells with matched capacity can be assembled and there is the option to reject problematic cells before adding to the stack. This is not feasible with regular bipolar stack assembly.

Moreover, according to an embodiment of the present invention, the unit construction step includes;
a. forming a first electrode layer on a first electrode support element;
b. adding a separator layer proximal to the first electrode layer;
c. forming a second electrode layer on a second electrode support element, and juxtaposing with the separator layer; sealing at least one unit end;
d. adding electrolyte to the unit; and
e. optionally performing a second sealing step.

Additionally, according to some embodiments of the present invention, some of these steps are reversed or omitted.

Furthermore, according to an embodiment of the present invention, the method according further includes forming;
a. an anode conductive end section adapted for current take off from the anode active material support element; and
b. a cathode conductive end section adapted for current take off from the cathode active material support element.

The present invention will be more fully understood from the following detailed description of the preferred embodiments thereof, taken together with the drawings.

### BRIEF DESCRIPTION OF THE DRAWINGS

The invention will now be described in connection with certain preferred embodiments with reference to the following illustrative figures so that it may be more fully understood.

With specific reference now to the figures in detail, it is stressed that the particulars shown are by way of example and for purposes of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

In the drawings:
Fig. 1A is a simplified schematic illustration showing a vertical side cross-sectional view of two monopolar battery cells forming a quasi-bipolar cell construction, in accordance with an embodiment of the present invention;
Fig 1B is a simplified schematic illustration showing a vertical side cross-sectional view of two of a vertical cross section, in accordance with an embodiment of the present invention;
Fig. 1C shows a jelly roll construction of anode and cathode within an individual cell of Fig. 1A or Fig. 1B, in accordance with some embodiments of the present invention;
Fig. 2 is a simplified schematic illustration showing a vertical cross-sectional view of two monopolar battery cells and their combination to form a three-dimensional quasi-bipolar stack, in accordance with an embodiment of the present invention;
Figs. 3A-3C are simplified schematic illustrations of combination methods of quasi- monopolar battery cells to form quasi-bipolar stacks in accordance with embodiments of the present invention;
Fig. 4 is a simplified flow chart of a method for producing a monopolar cell of Fig. 1, in accordance with an embodiment of the present invention;
Fig. 5 is a simplified flow chart of a method for producing a quasi-bipolar battery stack, in accordance with an embodiment of the present invention;
Fig. 6A is a simplified schematic illustration of an assembly of three adjacent cells separated by welded or corrugated elements, in accordance with an embodiment of the present invention;
Fig. 7A is a simplified schematic three-dimensional exploded illustration of a monopolar battery cell, in accordance with an embodiment of the present invention;
Fig. 7B is a simplified schematic three-dimensional illustration of a monopolar battery cell, in accordance with an embodiment of the present invention;
Fig. 7C is a simplified schematic illustration of a side view of the monopolar battery cell of Fig. 7B, in accordance with an embodiment of the present invention;
Fig. 7D is a simplified schematic illustration of a side view of a quasi-monopolar battery cell with current collector extensions, in accordance with an embodiment of the present invention;
Fig. 7E is a simplified schematic illustration of a side view of four connectors, in accordance with some embodiments of the present invention;
Fig. 8A is a simplified schematic illustration of a vertical cross section of a battery assembly with five cells interconnected via corrugated cell interconnections, in accordance with an embodiment of the present invention;
Fig. 8B is another simplified schematic illustration of a vertical cross section of a battery assembly with five cells interconnected via corrugated cell interconnections, in accordance with an embodiment of the present invention;
Fig. 9A is a simplified schematic illustration of a vertical cross section of two monopolar battery cells with current collector extensions and a corrugated interconnector, in accordance with an embodiment of the present invention;
Fig. 9B is a simplified schematic illustration of a vertical cross section of the two monopolar battery cells with current collector extensions and the corrugated interconnector after welding together to form a quasi-bipolar battery in accordance with an embodiment of the present invention;
Fig. 9C is a simplified schematic illustration of a vertical cross section of a quasi-bipolar battery assembly comprising five cells of Fig. 9B and cooling means, in accordance with an embodiment of the present invention;
Fig. 10A is a simplified schematic illustration of a vertical cross section of two monopolar battery cells with current collector extensions and another corrugated interconnector, in accordance with an embodiment of the present invention;
Fig. 10B is a simplified schematic illustration of a vertical cross section of the two monopolar battery cells with current collector extensions and the corrugated interconnector after welding together to form a quasi-bipolar battery, in accordance with an embodiment of the present invention;
Fig. 10C is a simplified schematic illustration of a vertical cross section of a quasi-bipolar battery assembly comprising five cells of Fig. 10B and cooling means, in accordance with an embodiment of the present invention;
Fig. 11 is a simplified schematic illustration of a horizontal cross section of Fig. 10C, in accordance with an embodiment of the present invention; and
Fig. 12 is another simplified schematic illustration of a horizontal cross section of Fig. 10C, in accordance with an embodiment of the present invention.

In all the figures similar reference numerals identify similar parts.

### DETAILED DESCRIPTION OF PREFERRED EMBODIMENTS

In the detailed description, numerous specific details are set forth in order to provide a thorough understanding of the invention. However, it will be understood by those skilled in the art that these are specific embodiments and that the present invention may be practiced also in different ways that embody the characterizing features of the invention as described and claimed herein.

The terms "plurality" or "a plurality" as used herein include, for example, "multiple" or "two or more". For example, "a plurality of items" includes two or more items.

By the term "quasi-bipolar" is meant that each of two adjacent cells is in fact monopolar, having one outer face that is the anodic cell terminal supporting anode active material or electrically connected with a substrate supporting anode active material inside the cell, while the other face of the same cell is the cathodic cell terminal supporting cathode active material or electrically connected with a substrate supporting cathode active material within the cell. When two of these cells are juxtaposed, anode and cathode active materials are in contact across the (electrically connected) intervening walls similar to the situation in a regular bipolar construction.

By "footprint" is meant an area of the projection of a peripheral rim of a battery cell.

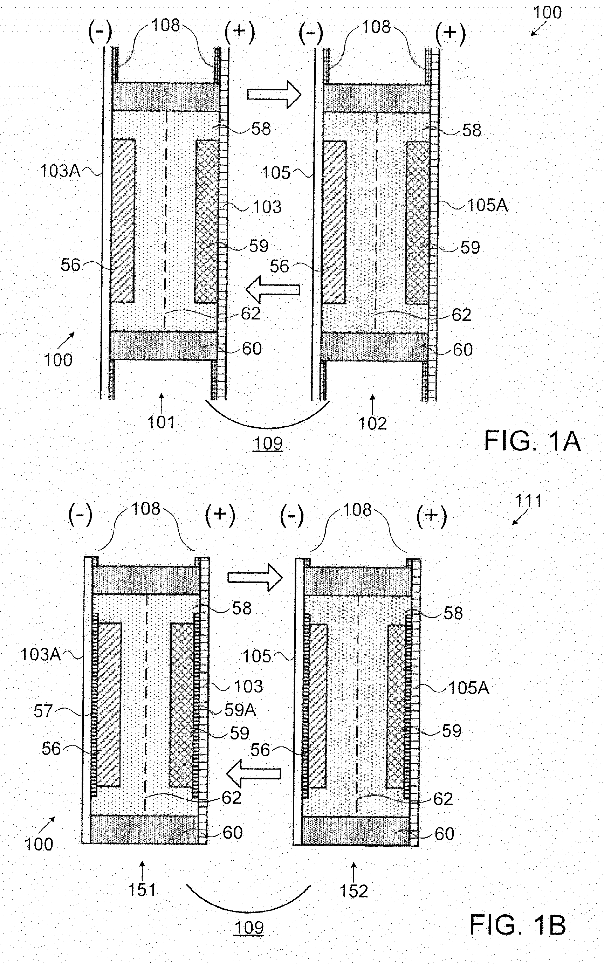

Reference is now made to Fig. 1A, which is a simplified schematic illustration showing a vertical side cross-sectional view of two monopolar battery cells 101, 102, forming a quasi-bipolar cell construction 100, in accordance with an embodiment of the present invention.

The particularly interesting quasi-bipolar construction 100 according to the present invention is shown in Fig. 1A in side schematic. Cells 101 and 102 are standalone cells with appropriate end foils 103, 103A for contacting the respective anode and cathode active materials. These cells can be juxtaposed together to give a quasi-bipolar cell construction 100 as shown, where the cathode wall 103 of the first cell contacts electrically the anode wall 105 of the next cell thereby forming a quasi-bipolar electrode 109. Sensing end foils 108 projecting from the cell for temperature monitoring and cell balancing purposes can be coated on their inner surfaces (or a major portion of the projecting foil, not shown) with an insulating layer 108 to prevent shorts. The sensing foils 108 should be minimal in length and, if necessary, can be bent back to lie in the space between adjacent cells.

The two monopolar battery cells 101, 102, are constructed and configured to enable use in electric vehicles (see examples hereinbelow). The construction of these cells and those in Fig, 2 are configured for high power, large area and enable non-flexible and flexible quasi-bipolar assemblies.

Reference is now made to Fig 1B, which is a simplified schematic illustration showing a vertical side cross-sectional view 111 of two quasi-monopolar battery cells 151, 152, in accordance with an embodiment of the present invention.

An alternative embodiment to cell 100 (Fig. 1A) for a quasi-bipolar construction is shown in Fig. 1B. Here the anode active material 56 in each cell is supported on an anode support 57 (mesh, foil or foam), and the cathode active material 59 is supported on a cathode support 59A.

The anode support is conveniently bonded (e.g. by welding) to the cell outer face (negative terminal) 103A and the cathode support bonded to the other face of the cell (positive terminal) 103.

According to one embodiment, in cell 101, item 103A is the anode material support and 103 is the cathode material support. Similarly, in cell 102, item 105 is the anode material support and 105A is the cathode material support. When the cells are juxtaposed, 103A becomes the anode end foil and 105A becomes the cathode end foil.

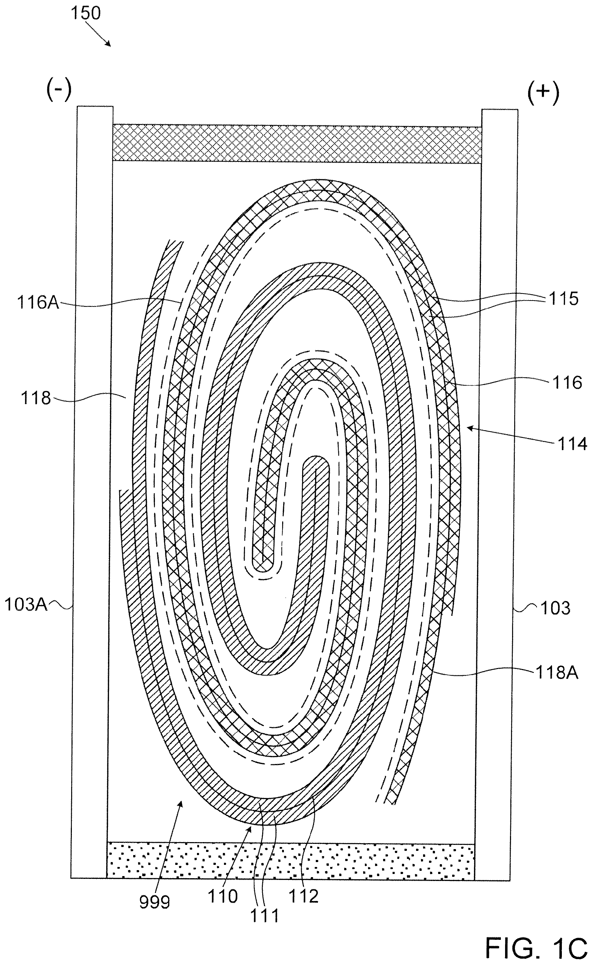

Reference is now made to Fig. 1C, which shows a monopolar battery cell 150 having a jelly roll construction of an anode 110 and cathode 114 within an individual cell of Fig. 1A or Fig. 1B, in accordance with some embodiments of the present invention;

This is a more elaborate embodiment of Fig. 1B and uses a jelly roll construction for the anode and cathode to achieve greater capacity per cell.

The anode 110 comprises active anode material 111 on both sides of anode current collector 112 and a cathode 114 comprises cathode active material 115 on both sides of cathode current collector 116. Anode 112 and cathode 114 are rolled up into a jelly roll assembly with separator 116A between them. Since anode and cathode are to be welded to the inner faces 103A and 103 of the quasi-bipolar cell a portion (shown as 118) of the anode current collector and an end portion (shown as 118A) of the cathode current collector is left unpasted with active material on its outer face, to enable good welding with cell walls 103 and 103A. In other embodiments (not shown) the jelly roll (or its constituent anode and cathode current collectors) is fitted with additional conductors along its length, or as side contactors (not shown), that can be also welded to the respective cell walls. Once this welding is completed the cell can be filled with electrolyte 999 (suitable aqueous or non-aqueous electrolyte depending on the battery chemistry) and sealed.

Important process and constructional advantages result with this construction. In the case of a regular prior art bipolar plate, one side is prepared (for example by pasting or pressing) with anode active material paste and one side is prepared with cathode active material paste. This can often lead to contamination because anode material must be normally kept well away from cathode material and *vice versa*.

In Fig. 1B, only one material is applied to each current collector, note then for example in a lithium-ion cell that a conventional lithium battery active material pasting machine can be used. Secondly in a conventional prior art bipolar stack, the stack is built up laboriously cell by cell each time adding electrolyte and sealant and the next bipolar plate. If any mistake, capacity anomaly or misalignment occurs it is difficult to undo. In the standalone approach each cell is a complete sealed unit and cells may be easily matched, checked and stacked or replaced as required.

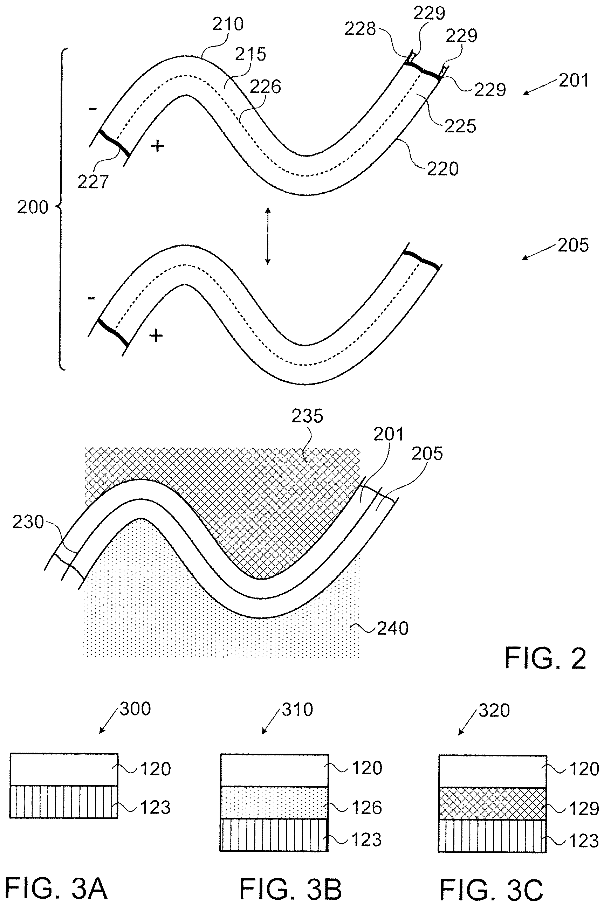

Reference is now made to Fig. 2, which is a simplified schematic illustration showing a vertical cross-sectional view of two monopolar battery cells and their combination to form a three-dimensional quasi-bipolar stack 200 (with an optional spacing element (not shown), in accordance with an embodiment of the present invention.

Fig. 2 is a simplified schematic illustration showing a vertical cross-sectional view of two monopolar battery cells and their combination to form a three-dimensional quasi-bipolar stack, in accordance with an embodiment of the present invention;

Fig. 2 shows combination of two long standalone cells into a three-dimensional S-shaped quasi-bipolar stack (other geometries possible), with appropriate end sections that maintain the stack geometry in a rigid, compressed S-shape and allow good high current takeoff from the outer cell foils.

In Fig. 2, two similar flexible standalone cells are numbered 201 and 205. In cell 201 item 210 is a foil (preferably copper, in the case of a high voltage lithium cell) that contacts anode active material 215 in the cell, while 220 is a foil (preferably aluminum) that contacts cathode active material 225 in the cell. The active materials are separated by a separator 226, while the cell contains electrolyte and is edge sealed 227 at the periphery. The cell has projecting foils 228 at each side acting as terminals for voltage, temperature monitoring and cell balancing. The inner faces of foil projections 228 or a major portion of those projections (not shown) are covered with an insulator 229 to prevent shorts. The two cells 201 and 205 are juxtaposed as shown in the lowermost section of the Figure in an S-shaped topology observing polarities to give a series connected quasi-bipolar assembly. The cells are in electrically conductive contact along line 230 using direct contact, conductive adhesive or a conducting interlayer such as a metal, graphite, carbon conducting polymer or polymer with conducting filler in sheet or foam form.

A preferred embodiment of the cell of the present invention comprises a corrugated metal sheet (not shown) disposed between adjacent cells.

Current takeoff from the cells is via robust conductive end sections 235 for the anode and 240 for the cathode, in close contact with or conductively bonded to the end foils or plates. The end plates at each side of the quasi-bipolar stack are constructed, according to some embodiments, out of an adequately conductive metal. This may comprise, in some cases a current takeoff sheet, supported by a light rigid plastic frame (not shown).

In the case that an electrically conductive sheet or adhesive layer is placed between the adjacent cells, it is possible to include a temperature-triggered resistive component (not shown), such as a polymerizing plastic in the sheet or layer, that will greatly increase the resistance between cells in the case of battery overheating and for safety, will electrically isolate the individual cells.

Furthermore, in the case that an electrically conductive sheet or adhesive layer is placed between the adjacent cells, it is beneficial to incorporate holes or channels (not shown) in the sheet or layer that will aid cooling of the cells, for instance under air cooling conditions. According to one example, when the sheet between the cells is a metal, it can be configured in corrugated form.

These end sections keep the cells clamped rigidly in the S-shape configuration and are preferably open-celled metallic structures (preferably from aluminum) to save weight. It should be clear that this S-shape configuration (which allows considerable increase of individual cell area, cell capacity and current output in a compact manner) cannot be built up using a conventional prior art bipolar construction.

Figs. 3A-3C are simplified schematic illustrations of combination methods of monopolar battery cells to form quasi-bipolar stacks 300, 310 and 320, respectively, in accordance with an embodiment of the present invention;

Cells may be bonded together with conductive adhesive. Alternately as in Fig. 3C a conducting sheet 129 such as a bridging metal foil, a conductive polymer, a graphite foil or plastic sheet with conductive filler is placed between adjacent cells. In a pressed and confined stack construction this embodiment could even allow disassembly and replacement of cells. Disassembly and replacement of cells is advantageous for periodic maintenance (aftermarket) of battery performance in electric vehicle applications, effectively rendering the battery serviceable.

Fig. 3A shows a foil 120, which is configured to support the anode active material of one cell (not shown) and foil 123 supports the cathode material of the adjacent cell (not shown) with the two foils in pressed contact. In Fig. 3B foils are bonded by a conducting adhesive 126. Examples of the adhesive are epoxy, acrylic or silicone and the conductive filler may be a powder selected from carbon, graphite, ceramic or metal. In a double foil quasi-bipolar unit the foil thicknesses may be reduced so as not to increase greatly the weight over a single metal bipolar plate.

In Fig. 3C, the cells are kept spread apart using a corrugated metal spacer 129.

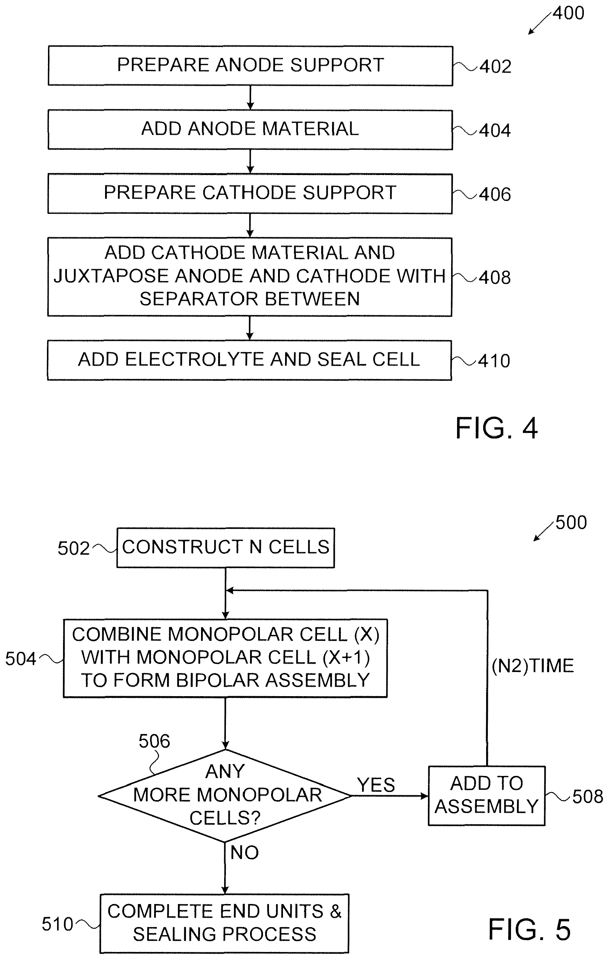

Reference is now made to Fig. 4, which is a simplified flow chart 400 of a method for producing a monopolar cell 101, 103 of Fig. 1, in accordance with an embodiment of the present invention. It should be understood that the order of the steps may be changed, reversed, run in parallel, according to some embodiments of the present invention.

In a first preparing step 402, a first electrode support element layer (105 or 103) is formed. According to some methods, the first step may be for preparation of the anode support element layer 105. Conversely, the first step may be the preparation of the cathode support element layer 103. This step may be performed by any suitable method known in the art, such as metal deposition, electrolytic deposition, electroless deposition and the like.

For the purpose of exemplification and simplification only, flowchart 400 shows the preparation of the anode material step 404 before that of the cathode 408. Step 404 deposits anode active material 56 onto anode support element layer 105. This step may be performed by any suitable method known in the art, such as pasting, pressing, impregnating, screen printing, lithography, metal deposition, electrolytic deposition, electroless deposition, electrophoretic deposition and the like.

In a cathode material addition step 408, a cathode active material 59 is deposited onto cathode support element layer 103 prepared in step 406. This step may be performed by any suitable method known in the art, such as pasting, pressing, impregnating, screen printing, lithography, metal deposition, electrolytic deposition, electroless deposition, electrophoretic deposition and the like. The cathode and anode are juxtaposed with the separator between them to complete step 406.

Thereafter, in a sealing of at least one unit end step 410, a sealing material is introduced near to the ends of the support elements to form the unit. In some cases, a first end may be sealed first and an electrolyte 58 added to the cell and thereafter, the second end is sealed 60. Further finishing steps such as insulating foil projecting edges, adding end foil current takeoff members, stack confining members, marking, labeling and packaging are omitted here for the sake of simplicity.

Reference is now made to Fig. 5, which is a simplified flow chart 500 of a method for producing a quasi-bipolar battery stack 100, 200 in accordance with an embodiment of the present invention.

In a monopolar cell (termed herein "unit") construction step 502, monopolar cells, such as units 101, 102 (Fig. 1) or cells 201 and 205 (Fig. 2) are constructed. One non-limiting example of the main construction steps is shown and described with reference to Fig. 4 hereinabove.

In a cell combining step 504, the first cell, such as 101 is juxtaposed with a second cell, such as 102. This juxtaposition brings anode support element layer 105 of second cell 102 into proximity/contact with the cathode support element layer 103 of the first cell 101, thereby forming a quasi-bipolar element 109.

In a checking step 506, it is checked to see if there are any more cells to be juxtaposed. If no, then a completion step 510 is performed, in which end units (exemplified as 235 and 240, Fig. 2) are formed at the far opposing ends of the two cells.

If yes, then addition step 508 is performed and a new cell is juxtaposed with either a far opposing end of the first cell 105 of cell 101 or 103 of cell 102, thereby forming another quasi-bipolar element 109 (not shown). Thus for n cells, there are n-1 quassi-bipolar elements 109.

Additionally, it should be noted that for n cells, step 508 is repeated n-2 times. Ultimately after step 508 has been repeated n-2 times, step 510 is finally performed to complete the construction of the quasi-bipolar battery assembly 100, 200.

It should be understood that the sequence of the steps may be changed, reversed and, if possible, some may be run in parallel.

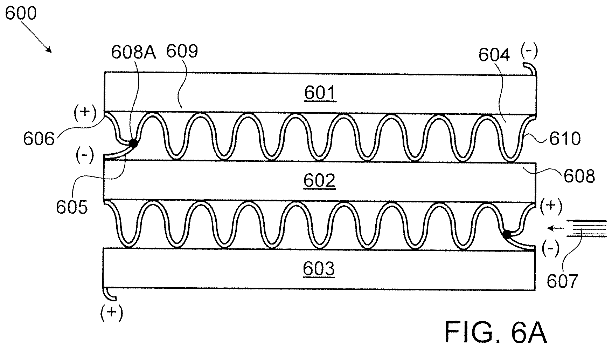

Fig. 6A is a simplified schematic illustration of a vertical cross section of an assembly 600 of three adjacent cells 601, 602, 603, in accordance with an embodiment of the present invention. Cells 601, 602, 603 may each individually be cell 100 (Fig 1A), cell 111 (Fig. 1B) and may optionally have an internal jelly roll construction 119 as shown in Fig. 1C.

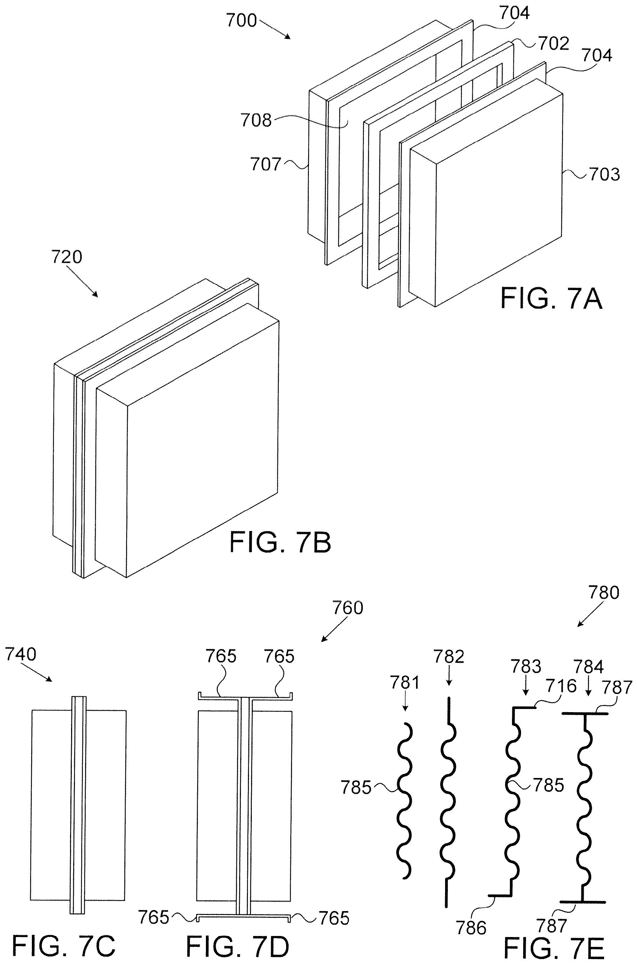

Fig.6A also shows a corrugated metallic element 610 welded at a weld point 608A to the bent-back terminal extension pieces 605, 606, which provide spaces 604 between adjacent cells 601, 602, and 603. These metallic elements 610 (also called spacers herein) enhance conductivity between cells and allow for facile inter-cell gaseous fluid cooling 607 (using air, gaseous Freon or the like). Terminal extension pieces 605, 606 projecting from terminal faces 608, 609 are bent-back and welded to corrugated element 610, such that the cell interspacing and footprint are maintained and made to fit in the gap between adjacent cells such as 601, 602 and 603. The corrugated metallic element 610 may be a thin corrugated metal sheet, advantageously perforated (not shown) for weight saving and improved air passage. Some non-limiting options for the spacers are shown in Fig. 7E.

Reference is now made to Fig. 7A, is a simplified schematic three-dimensional exploded illustration of a monopolar battery cell 700, in accordance with an embodiment of the present invention.

Monopolar battery cell 700 comprises two half-cell cases 703, 707 made, for instance by an embossing step of a metal foil. These cases are hollowed out and have an interior space 708 for receiving a jelly roll construction 119 (Fig. 1C) and electrolyte 999 (Fig. 1C). The two half-cell cases (also called elements) 703, 707 are constructed and configured to have a perimetric inner rim flange 704. Disposed between the two inner rim flanges is an insulation and sealing gasket 702.

Once the jelly roll is introduced to the interior space, anode and cathode are then welded internally to the terminal faces and once the two half cases are joined together with a sealing gasket, between them, electrolyte 999 is introduced into the space and the cell is hermetically sealed.

Fig. 7B shows a three-dimensional illustration of the exterior of the completed monopolar battery cell 720, in accordance with an embodiment of the present invention.

Reference is now made to Fig. 7C, which is a simplified schematic illustration of a side view 740 of the monopolar battery cell 720 of Fig. 7B, in accordance with an embodiment of the present invention.

An alternative embodiment to Fig. 7C is shown in Fig. 7D, which is a simplified schematic illustration of a side view of a monopolar battery cell 760 with current collector extensions 765, in accordance with an embodiment of the present invention.

Fig. 7E is a simplified schematic illustration of a side view of four connectors 781, 782, 783 and 784 in accordance with some embodiments of the present invention. These connectors may be constructed, for example out of a metal, and may have a spacing element such as a corrugated portion 785. Additionally, they may comprise one or more single-sided conductive end sections 786 and/or double-sided end section 787.

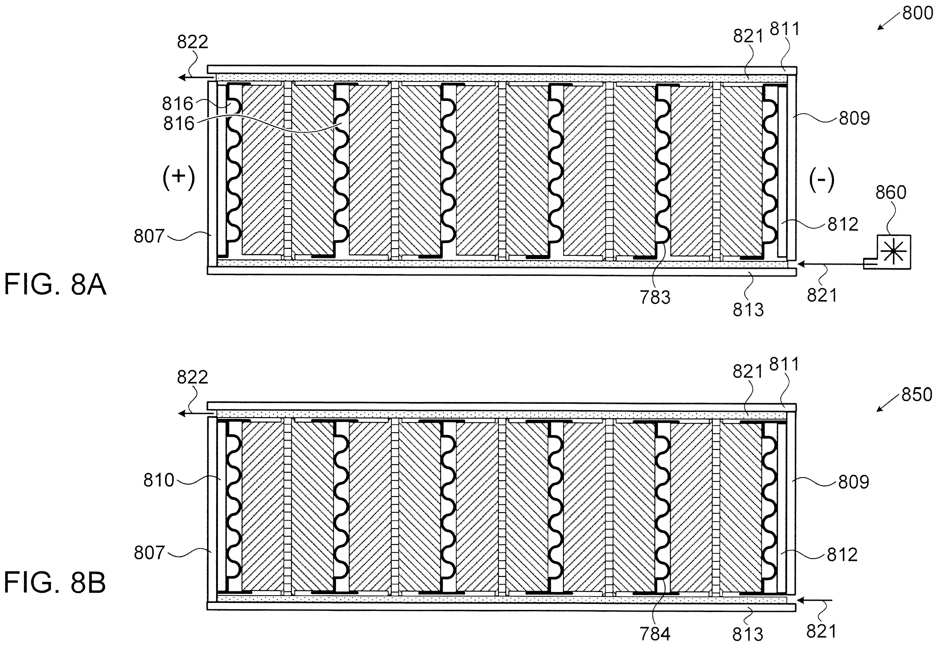

Reference is now made to Fig. 8A, which is a simplified schematic illustration of a vertical cross section of a battery assembly 800 with five cells 720 (Fig. 7B) interconnected via corrugated cell interconnections 783 (Fig. 7E), in accordance with an embodiment of the present invention.

Battery assembly 800 comprises five cells 720 connected in series via six interconnections 783. Each cell is disposed between two interconnections. Battery assembly 800 further comprises two battery terminal and compression plates 807, 809 and frame spacers 811, 813. The assembly is constructed and configured to provide a very high surface area for cooling. There is a top frame 811 and lower frame 813. The interconnections are constructed and configured to be placed in between cell cases 703, 707 (Fig. 7A). Since spacer/interconnection 783 comprises corrugated portion 785, numerous air spaces 816 (or channels) are provided in between cell cases 703, 707.

A gaseous cooling agent, such as air, can be introduced to a closed assembly at an entry point 821 from a gaseous cooling fluid/agent blower 860 and passed via air spaces 816 to the gaseous cooling agent exit 822.

As is seen in this figure, the cell bi-functional interconnection 783 (Fig 7E) is welded via single sided end sections 786 to adjacent cells ensuring the electric connection and providing feed-through volume between cells for effective cooling/ heat dissipation.

Reference is now made to Fig. 8B, which is another simplified schematic illustration of a vertical cross section of a battery assembly 850 with five cells 720 (Fig. 7B) interconnected via double sided corrugated cell interconnections 784 (Fig. 7E), in accordance with an embodiment of the present invention.

Double sided interconnections 784 comprise a double sided end section 787, which is welded at each end to two adjacent cells ensuring the electric connection and providing feed-through volume between cells for effective cooling/ heat dissipation.

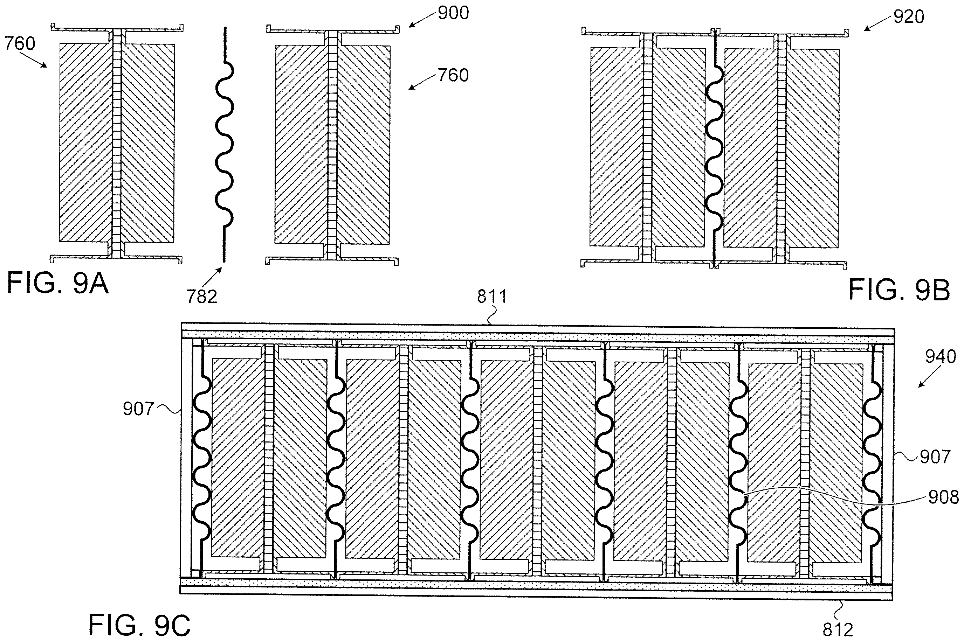

Fig. 9A shows a vertical cross section 900 of two monopolar battery cells 760 with current collector extensions 765 and a corrugated interconnector 782 (Fig. 7E), in accordance with an embodiment of the present invention. These are welded together as is shown in 920 Fig. 9B.

Fig. 9B is a simplified schematic illustration of a quasi-bipolar battery 920 comprising the two monopolar battery cells 760 with current collector extensions and the corrugated interconnector 782 (Fig. 7E) held in place by compression between adjacent cells..

Fig. 9C is a simplified schematic illustration of a vertical cross section of a quasi-bipolar battery assembly 940 comprising five cells 920 of Fig. 9B and six spacers 782 and battery terminal compression plates 907, in accordance with an embodiment of the present invention.

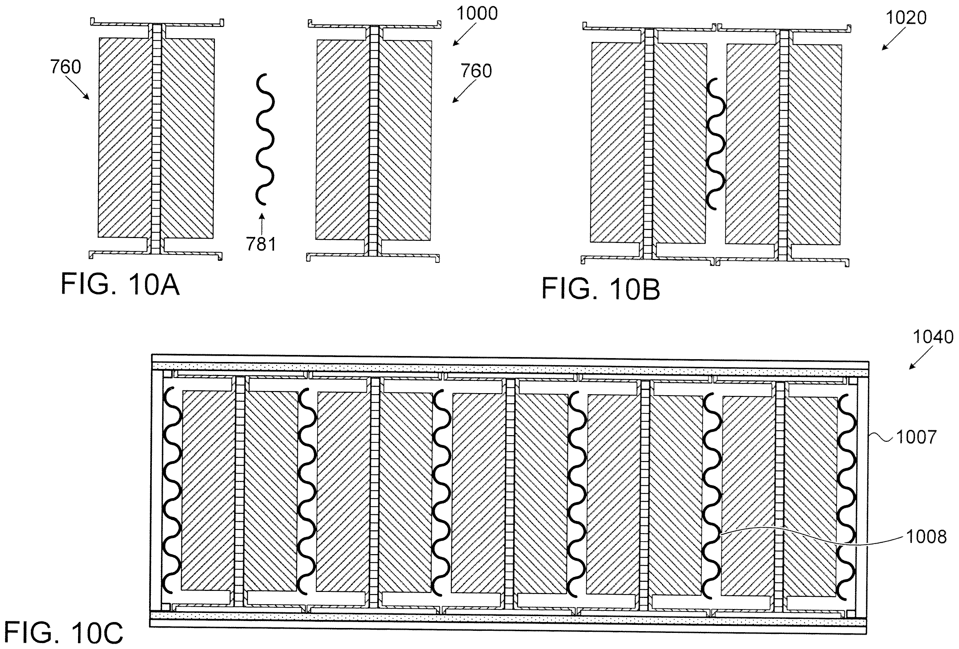

Reference is now made to Fig. 10A, which is a simplified schematic illustration of a vertical cross section 1000 of two monopolar battery cells 760 with current collector extensions and another corrugated interconnector (781, Fig. 7E), in accordance with an embodiment of the present invention.

Fig. 10B is a simplified schematic illustration of a vertical cross section of a quasi-bipolar battery cell 1020 comprising two monopolar battery cells 760 with current collector extensions and the corrugated interconnector 781 after pressing into place, in accordance with an embodiment of the present invention;

Reference is now made to Fig. 10C, which is a simplified schematic illustration of a vertical cross section of a battery assembly 1040 comprising five cells 1020 of Fig. 10B and six corrugated interconnectors 781 (Fig. 7E) and cooling means 1080, in accordance with an embodiment of the present invention.

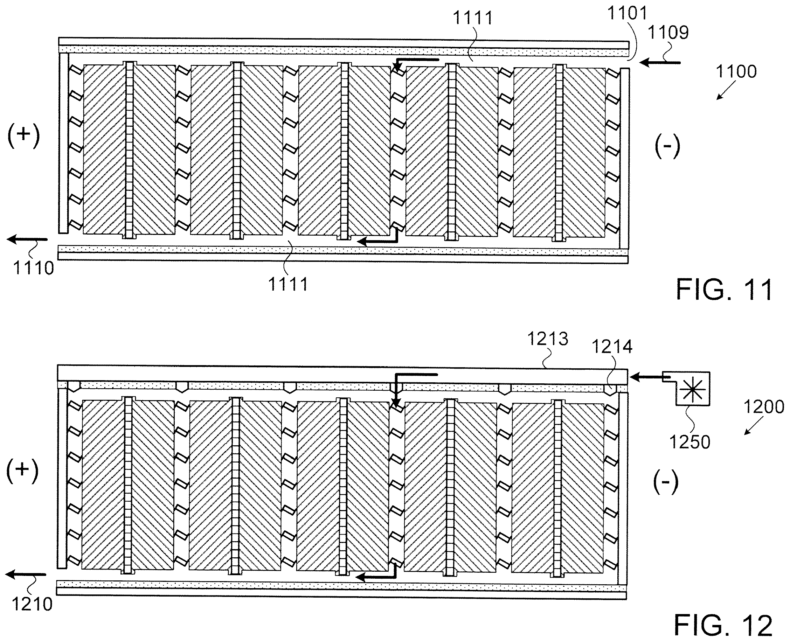

Fig. 11 is a simplified schematic illustration of a horizontal cross section 1100 of the battery assembly 1040 of Fig. 10C, in accordance with an embodiment of the present invention.

Assembly 1040 is constructed and configured to receive a cooling gaseous fluid 1109, such as air. The fluid passes through one or more inlet channels 1101 which run along one side of the cells 1020. Then, the air passes through spaces 1016 (seen better in Fig. 10C) between cells 760. The air then flows through one or more outlet channels 1111 to air exit 1110. Air may be replaced by any other suitable gaseous coolant.

Fig. 12 is a simplified schematic illustration of a horizontal cross section 1200 of the battery assembly 1040 of Fig. 10C with an external cooling apparatus 1213, in accordance with an embodiment of the present invention.

Assembly 1040 further comprises external cooling conduit 1213, which is in fluid connection with the assembly via expansion nozzles 1214, which allow the introduction of the cooling fluid 1212 from a cooling fluid provision apparatus 1250 through the nozzles and through spaces 1016 (seen better in Fig. 10C) between cells 760. The fluid exits through one or more outlet channels 1211 to fluid exit 1210.

A non-limiting example describes the steps of making a quasi-bipolar battery unit.

Example 1. Major steps of the process for a quasi-bipolar lithium ion cell assembly, according to one embodiment of the present invention (such as Fig. 6B).
1. Prepare anode support (e.g. copper foil).
2. Add anode material on both sides leaving one bare section at the end of one side.
3. Prepare cathode support (e.g. aluminum foil).
4. Add cathode material on both sides leaving one bare section at the end of one side.
5. Juxtapose anode and cathode with separator between them and wind on flat mandrel to give jelly roll, ensuring bare sections are outermost.
6. Weld bare end of anode to outer embossed anode foil (large terminal anode face of cell, which has a small strip section extending beyond the cell area)-material copper foil.
7. Weld bare end of cathode to outer embossed anode foil (large terminal cathode face of cell, which has a small strip section extending beyond the cell area)-material aluminum foil.
8. Seal edges of cell on three sides with hot melt thermoplastic foil.
9. Add electrolyte and complete the cell sealing.
10. Bend back projecting anode and cathode strip sections so as to lie between adjacent cells and weld these strips together.
11. Weld a corrugated metal foil between each cell at the join point of anode and cathode strip sections so as to space uniformly the cells and allow cooling channels.
12. Arrange cells in a suitable support structure to give a multicell battery.

It is to be understood that the invention is not limited in its application to the details set forth in the description contained herein or illustrated in the drawings. The invention is capable of other embodiments and of being practiced and carried out in various ways. Those skilled in the art will readily appreciate that various modifications and changes can be applied to the embodiments of the invention as hereinbefore described without departing from its scope, defined in and by the appended claims.

## Claims

1. A quasi-bipolar battery assembly (100) comprising:
a) at least two battery cells (101, 102), each battery cell comprising :
i) first and second metallic half-cell case elements (703, 707), said first and second half-cell elements are hollowed and each configured with a peripheral rim (704);
ii) an insulating sealing member (108) disposed between edges of said first and second metallic half-cell case elements, said insulating sealing member is configured as a gasket (702) adapted to seal said cell at said peripheral rims (704);
iii) an anode (105) and a cathode (103) separated by a porous separator, with said anode being in electrical connection with said first metallic half-cell case element and said cathode being in electrical connection with said second metallic half-cell case element;
iv) an electrolyte (999) disposed within said metallic half-cell case elements; and
b) at least one air space (816) disposed between two adjacent cells of said at least two battery cells, adapted to receive gaseous cooling fluid (860) therethrough;
wherein said adjacent battery cells are connected by electrically conductive corrugated interconnections (783, 784) at a plurality of connection points disposed in said at least one air space within the footprint of the battery cell.

2. A quasi-bipolar battery assembly according to claim 1, wherein said hollowed metallic elements are each of the form of a tray.

3. A quasi-bipolar battery assembly according to claim 2, wherein each tray comprises a base and a rim.

4. A quasi-bipolar battery assembly according to claim 3, wherein said base is a cell terminal and comprises an extension adapted to electrically connect to an adjacent cell.

5. A quasi-bipolar battery assembly according to claim 3, wherein the electrically conductive interconnections are in electrical connection with an outer side of said bases.

6. A quasi-bipolar battery assembly according to claim 5, wherein said electrically conductive interconnections comprise a spacer connector (610, 615) disposed in each air space to allow gaseous flow between said adjacent cells and said spacer and wherein said spacer connector (610, 615) is in direct and electrical contact with said bases.

7. A quasi-bipolar battery assembly according to claim 5, wherein said outer side of said bases is in direct contact with gaseous cooling fluid.

8. A quasi-bipolar battery assembly according to claim 5, further comprising a gaseous cooling fluid apparatus selected from a gaseous cooling fluid expansion valve and a pressurized gaseous cooling fluid blower.

9. A quasi-bipolar battery assembly according to claim 7, wherein gaseous cooling fluid is selected from air, a Freon and an inert gas.

10. A quasi-bipolar battery assembly according to claim 1, wherein said anode and said cathode separated by said porous separator are rolled up spirally.

11. A quasi-bipolar battery assembly according to claim 6, wherein said electrically conductive interconnections comprise at least one of a corrugated portion, a single-sided conductive end section and a double-sided end section.

12. A quasi-bipolar battery assembly according to claim 1, wherein said electrically conductive interconnections and said hollowed metallic elements do not extend substantially beyond a footprint of the cell.

13. A quasi-bipolar battery assembly according to claim 12, wherein said electrically conductive interconnections and said hollowed metallic elements do not extend beyond a footprint of the cell.

14. A quasi-bipolar battery assembly according to claim 9, wherein said electrically conductive interconnections each comprise said one corrugated portion and a first single-sided conductive end section in electrical connection with said second metallic element of a first battery cell and a second single-sided conductive end section in electrical connection with said first metallic element of a second battery cell.

## Patentansprüche

1. Quasi-bipolare Batterieanordnung (100) umfassend:
a) mindestens zwei Batteriezellen (101, 102), wobei jede Batteriezelle umfasst:
i) ein erstes und ein zweites metallisches Halbzellen-Gehäuseelement (703, 707), wobei das erste und das zweite Halbzellen-Element hohl sind, und jedes mit einem Außenrand (704) konfiguriert ist;
ii) ein isolierendes Abdichtungsglied (108), das zwischen Kanten des ersten und des zweiten metallischen Halbzellen-Gehäuseelements angeordnet ist, wobei das isolierende Abdichtungsglied als Dichtung (702) konfiguriert ist, die angepasst ist, die Zellen an den Außenrändern (704) abzudichten;
iii) eine Anode (105) und eine Kathode (103), die durch ein poröses Trennelement getrennt sind, wobei die Anode mit dem ersten metallischen Halbzellen-Gehäuseelement elektrisch in Verbindung steht und die Kathode mit dem zweiten metallischen Halbzellen-Gehäuseelement elektrisch in Verbindung steht;
iv) einen Elektrolyt (999), der innerhalb der metallischen Halbzellen-Gehäuseelemente angeordnet ist; und
b) mindestens einen Luftraum (816), der zwischen zwei benachbarten Zellen der mindestens zwei Batteriezellen angeordnet ist und angepasst ist, ein gasförmiges Kühlfluid (860) dadurch zu erhalten;
wobei die benachbarten Batteriezellen an mehreren Verbindungspunkten, die in dem mindestens einen Luftraum innerhalb des Profils der Batteriezelle angeordnet sind, durch elektrisch leitfähige gewellte Kopplungen (783, 784) verbunden sind.

2. Quasi-bipolare Batterieanordnung gemäß Anspruch 1, wobei die hohlen metallischen Elemente jeweils die Form einer Schale aufweisen.

3. Quasi-bipolare Batterieanordnung gemäß Anspruch 2, wobei jede Schale eine Basis und einen Rand umfasst.

4. Quasi-bipolare Batterieanordnung gemäß Anspruch 3, wobei die Basis ein Zellenanschluss ist und eine Erweiterung umfasst, die angepasst ist, mit einer benachbarten Zelle elektrisch in Verbindung zu stehen.

5. Quasi-bipolare Batterieanordnung gemäß Anspruch 3, wobei die elektrisch leitfähigen Kopplungen mit einer Außenseite der Basen elektrisch in Verbindung stehen.

6. Quasi-bipolare Batterieanordnung gemäß Anspruch 5, wobei die elektrisch leitfähigen Kopplungen ein Zwischenstück-Anschlussteil (610, 615) umfassen, das in jedem Luftraum angeordnet ist, um eine gasförmige Strömung zwischen den benachbarten Zellen und dem Zwischenstück zu ermöglichen, und wobei das Zwischenstück-Anschlussteil (610, 615) in direktem und elektrischen Kontakt mit den Basen steht.

7. Quasi-bipolare Batterieanordnung gemäß Anspruch 5, wobei die Außenseite der Basen in direktem Kontakt mit gasförmigem Kühlfluid steht.

8. Quasi-bipolare Batterieanordnung gemäß Anspruch 5, weiterhin umfassend eine Vorrichtung für gasförmiges Kühlfluid, ausgewählt aus einem Expansionsventil für gasförmiges Kühlfluid und einem Gebläse für unter Druck stehendes gasförmiges Kühlfluid.

9. Quasi-bipolare Batterieanordnung gemäß Anspruch 7, wobei das gasförmige Kühlfluid ausgewählt ist aus Luft, einem Freon und einem inerten Gas.

10. Quasi-bipolare Batterieanordnung gemäß Anspruch 1, wobei die Anode und die Kathode, die durch das poröse Trennelement getrennt sind, spiralförmig aufgerollt sind.

11. Quasi-bipolare Batterieanordnung gemäß Anspruch 6, wobei die elektrisch leitfähigen Kopplungen mindestens eines von einem gewellten Abschnitt, einem einseitigen leitfähigen Endbereich und einem doppelseitigen Endbereich umfassen.

12. Quasi-bipolare Batterieanordnung gemäß Anspruch 1, wobei die elektrisch leitfähigen Kopplungen und die hohlen metallischen Elemente sich nicht wesentlich über ein Profil der Zelle hinaus erstrecken.

13. Quasi-bipolare Batterieanordnung gemäß Anspruch 12, wobei die elektrisch leitfähigen Kopplungen und die hohlen metallischen Elemente sich nicht über ein Profil der Zelle hinaus erstrecken.

14. Quasi-bipolare Batterieanordnung gemäß Anspruch 9, wobei die elektrisch leitfähigen Kopplungen jeweils den einen gewellten Abschnitt und einen ersten einseitigen leitfähigen Endbereich, die in elektrischer Verbindung mit dem zweiten metallischen Element einer ersten Batteriezelle stehen, und einen zweiten einseitigen leitfähigen Endbereich, der in elektrischer Verbindung mit dem ersten metallischen Element einer zweiten Batteriezelle steht, umfassen.

## Revendications

1. Ensemble de batterie quasi-bipolaire (100) comprenant
a) au moins deux cellules de batterie (101, 102), chaque cellule de batterie comprenant :
i) des premier et second éléments de compartiment métallique de demi-cellule (703, 707), lesdits premier et second éléments de demi-cellule étant creusés et chacun configuré avec un rebord périphérique (704) ;
ii) un élément d'étanchéité isolant (108) disposé entre les bords desdits premier et second éléments de compartiment métallique de demi-cellule (702) et apte à sceller ladite cellule au niveau desdits rebords périphériques (704) ;
iii) une anode (105) et une cathode (103) séparées par un séparateur poreux, ladite anode étant en connexion électrique avec ledit premier élément de compartiment métallique de demi-cellule et ladite cathode étant en connexion électrique avec ledit second élément de compartiment métallique de demi-cellule ;
iv) un électrolyte (999) disposé dans lesdits premier et second éléments de demi-cellule ; et
b) au moins un espace d'air (816) disposé entre deux cellules adjacentes desdites au moins deux cellules de batterie (860) à travers celui-ci ;
lesdites cellules de batterie adjacentes étant connectées par des interconnections ondulées (783, 784) au niveau d'une pluralité de points de connexion disposés dans ledit au moins un espace d'air dans l'empreinte de la cellule de batterie.

2. Ensemble de batterie quasi-bipolaire selon la revendication 1, dans lequel lesdits éléments métalliques creusés ont chacun la forme d'un plateau.

3. Ensemble de batterie quasi-bipolaire selon la revendication 2, dans lequel ledit plateau comprend une base et un rebord.

4. Ensemble de batterie quasi-bipolaire selon la revendication 3, dans lequel ladite base est un terminal de cellule et comprend une extension apte à se connecter électriquement à une cellule adjacente.

5. Ensemble de batterie quasi-bipolaire selon la revendication 3, dans lequel les interconnections électriquement conductrices sont en connexion électrique avec une face extérieure desdites bases.

6. Ensemble de batterie quasi-bipolaire selon la revendication 5, dans lequel lesdites interconnections électriquement conductrices comprennent un connecteur écarteur (610, 615) disposé dans chaque espace d'air pour permettre un flux gazeux entre lesdites cellules adjacentes et ledit écarteur et dans lequel ledit connecteur écarteur (610, 615) est en contact direct et électrique avec lesdites bases.

7. Ensemble de batterie quasi-bipolaire selon la revendication 5, dans lequel ladite face extérieure desdites bases est en contact direct avec du fluide de refroidissement gazeux.

8. Ensemble de batterie quasi-bipolaire selon la revendication 5, comprenant en outre un appareil à fluide de refroidissement gazeux sélectionné parmi une vanne d'expansion à fluide de refroidissement gazeux et un souffleur de fluide de refroidissement gazeux pressurisé.

9. Ensemble de batterie quasi-bipolaire selon la revendication 7, dans lequel le fluide de refroidissement gazeux est sélectionné parmi l'air, un fréon et un gaz inerte.

10. Ensemble de batterie quasi-bipolaire selon la revendication 1, dans lequel ladite anode et ladite cathode séparées par ledit séparateur poreux sont enroulées en spirale.

11. Ensemble de batterie quasi-bipolaire selon la revendication 6, dans lequel lesdites interconnections électriquement conductrices comprennent au moins un élément parmi une partie ondulée, une section terminale conductrice à simple face et une section terminale à double face.

12. Ensemble de batterie quasi-bipolaire selon la revendication 1, dans lequel lesdites interconnections électriquement conductrices et lesdits éléments mécaniques creusés ne s'étendent pas sensiblement au-delà d'une empreinte de la cellule.

13. Ensemble de batterie quasi-bipolaire selon la revendication 12, dans lequel lesdites interconnections électriquement conductrices et lesdits éléments mécaniques creusés ne s'étendent pas au-delà d'une empreinte de la cellule.

14. Ensemble de batterie quasi-bipolaire selon la revendication 9, dans lequel lesdites interconnections électriquement conductrices comprennent chacune ladite partie ondulée et une première section terminale conductrice a simple face en connexion électrique avec ledit second élément métallique d'une première cellule de batterie et une seconde section terminale conductrice à simple face en connexion électrique avec ledit premier élément métallique d'une seconde cellule de batterie.
